Europäisches Patentamt

European Patent Office

Office européen des brevets

(11) Veröffentlichungsnummer: **0 278 288**
**A1**

# EUROPÄISCHE PATENTANMELDUNG

(21) Anmeldenummer: **88100917.9**

(22) Anmeldetag: **22.01.88**

(51) Int. Cl.⁴: **B23B 51/02**

(30) Priorität: **11.02.87 DE 3704106**

(43) Veröffentlichungstag der Anmeldung:
**17.08.88 Patentblatt 88/33**

(84) Benannte Vertragsstaaten:
**CH DE GB IT LI**

(71) Anmelder: **HAWERA Präzisionswerkzeuge GmbH**
**Wangener Str. 133**
**D-7980 Ravensburg(DE)**

(72) Erfinder: **Scheuch, Anton**
**Kuppelnaustrasse 41**
**D-7980 Ravensburg(DE)**
Erfinder: **Müller, Walter**
**Kepplerstrasse 5**
**D-7987 Weingarten(DE)**
Erfinder: **Skrypczinski, Jürgen**
**Angelestrasse 8**
**D-7981 Oberhofen(DE)**

(74) Vertreter: **Patentanwälte Dipl.-Ing. E. Eisele**
**Dr.-Ing. H. Otten**
**Seestrasse 42**
**D-7980 Ravensburg(DE)**

(54) **Bohrwerkzeug zur Bearbeitung von langspanenden Werkstoffen.**

(57) Es wird ein Bohrwerkzeug insbesondere zur Verwendung als bohrautomatentauglicher Vollhartmetallbohrer zur Herstellung von Leiterplattenbohrungen vorgeschlagen, der zur Vermeidung einer automatenfeindlichen Langspankrause im Bereich der Bohrerhauptschneiden (7) radienförmige Ausnehmungen (11, 11', 11") aufweist, die zu einer Verwirbelung von entstehenden langen Spänen führen.

Fig 3

EP 0 278 288 A1

## "Bohrwerkzeug zur Bearbeitung von langspanenden Werkstoffen"

Die Erfindung betrifft ein Bohrwerkzeug zur Bearbeitung von langspanenden Werkstoffen nach dem Oberbegriff des Anspruchs 1. Die Erfindung bezieht sich insbesondere auf ein Bohrwerkzeug zur Verwendung als Bohrautomaten tauglicher Vollhartmetallbohrer zur Herstellung von Leiterplattenbohrungen nach dem Oberbegriff des Unteranspruchs 5.

Bei der spanabhebenden Bearbeitung, so auch beim Bohren entstehen Späne die je nach Art ihrer Entstehung in Fließspäne, Scherspäne oder Reißspäne unterteilt werden. Fließspäne bilden sich insbesondere durch Verformen (fließen) des Werkstoffes in der Scherzone, ohne daß ein Trennen des Spans eintritt. Je nach Beschaffenheit des Werkstücks und des Bohrwerkzeugs sowie der Bohrparameter treten unterschiedliche Spanbildungen auf.

Um lange Späne beim Bohren und die damit verbundenen Nachteile zu vermeiden, sind Bohrwerkzeuge oder Fräser bekannt geworden, die Zacken in der Hauptschneide aufweisen, die als Spanbrecher dienen. Hierfür sind weiterhin scharfe Abbruchkanten hinter der Hauptschneide bekannt geworden, die als Spanleit-oder Spanumlenkstufe zum Brechen des Spanes dienen.

Für die Erstellung von Bohrungen in ElektronikLeiterplatten wie beispielsweise Fanglochbohrungen oder sonstigen Funktionsbohrungen sind Vollhartmetallbohrer bekannt geworden, die in CNC-Bohrautomaten verwendet werden. Diese Bohrautomaten sind mit technologisch unterschiedlichen Werkzeugmagazinen ausgerüstet, die zwischen zehn und hundert Werkzeuge pro Bohrspindel aufnehmen. Dabei werden die Werkzeuge entsprechend dem CNC-Programm entweder von der Bohrspindel direkt oder über ein Greifersystem aus dem Werkzeugmagazin abgeholt und nach Bearbeitung des Werkstücks, insbesondere der Leiterplatte wieder im Magazin abgelegt. Diese Werkzeugmagazinfunktion läuft dabei störungsfrei, solang keine am Werkzeug haftende Fremdkörper, insbesondere Bohrspäne vorhanden sind, die die Übernahme in das Werkzeugmagazin oder in die Spannzange der Bohrspindel stören.

Die zu bearbeitenden Leiterplatten sind einflächig, meist auch beidflächig mit einer Kupferfolie kaschiert, die eine Dicke zwischen 0,017 und 0,035 mm aufweist. Da der Werkstoff Kupfer ein langspanender Werkstoff ist, entsteht beim Bohrprozeß der Kupferkaschierung der Leiterplatte ein Langspangut, welches sich um den Bohrer herum wickelt und eine sog. Langspankrause am Bohrerende bildet.

Insbesondere bei der Bearbeitung von Leiterplatten mit Bohrern deren Nenndurchmesser größer ist als der Spanschaft bildet sich eine Langspankrause oder ein Späneknäuel welche in Richtung des Spanschafts transportiert wird und bei Automaten-Bohrwerkzeugen vor dem Anschlagring zu liegen kommt. Diese Langspankrause am Bohrer verhindert jedoch oftmals die richtige Ablage des Bohrers im Magazin bzw. die Wiederaufnahme durch die Arbeitsspindel. Hierdurch wird die vollautomatische Werkzeugmagazinfunktion bzw. der Werkzeugwechselvorgang vom Programmablauf des Bohrautomaten empfindlich gestört. d. h. das Programm muß bei Störungen unterbrochen und die Langspankrause manuell entfernt werden.

Bei Bohrwerkzeugen mit einem Nenndurchmesser der kleiner ist als der Spandurchmesser, insbesondere bei Bohrwerkzeugen mit einem Nenndurchmesser $\approx$ 3 mm zur Verwendung in CNC-Bohrautomaten tritt dieser Mangel nicht so sehr auf, da infolge des kleinen Bohrerdurchmessers die Späne eng gewickelt werden und beim Auftreffen auf den größer werdenden Bohrerschaft mit Übergangskonus nicht zum Distanzring übertreten können. Derartige Späne werden beim Bohrvorgang meist von alleine abgestreift.

Der Erfindung liegt die Aufgabe zugrunde, die vorgenannten Nachteile zu beseitigen und insbesondere ein Bohrwerkzeug zu schaffen, bei welchem durch konstruktive Maßnahmen das Entstehen der Langspankrause an sich vermieden wird bzw. das entstehende Langspangut derart eingerollt wird, daß eine Verknotung am Bohrerhals vermieden wird.

Diese Aufgabe ist ausgehend von einem Bohrwerkzeug der einleitend bezeichnenden Art durch die kennzeichnenden Merkmale des Anspruchs 1 und im speziellen durch die kennzeichnenden Merkmale des Unteranspruchs 5 gelöst.

Der Erfindung liegt der Kerngedanke zugrunde, daß die technischen Prinzipien wie Bohrautomat, Magazinsystem, Anschlagring bzw. Distanzring, Bohrerbaumaße usw. nicht geändert werden können; dies gilt ebenso für die Auswahl des zu bohrenden Materials, z. B. Kupfer, welches zur Langspanbildung neigt. Die Lösung wird erfindungsgemäß in einer Veränderung der Bohreigenschaften des Werkzeugs selbst gefunden. Dies geschieht erfindungsgemäß dadurch, daß radienförmige Ausnehmungen die sonst plane Schnittebene der Hauptschneide unterbrechen wobei diese Ausnehmungen eine Schnittfläche bilden, in deren Bereich die entstehenden Späne in komplimentärer Richtung, d. h. in stets entgegengesetzter oder sich ändernder Richtung gegenüber dem normalen Schneidbereich abgelenkt werden, wobei die entstehenden langen Späne verwirbelt werden und sich nicht um den Bohrer wickeln. Das so verwirbelte nbereich um den Bohrer wickeln und am Bohrerende ine Langspankrause bilden, die die Funktion der Werkzeugmagazine stört.

Durch die erfindungsgemäßen radiernförmigen Ausnehmungen wird demnach der sonst entstehende Fließspan durch ständige Umlenkung im Schneidbereich der Ausnehmung gekrümmt, wodurch eine Verwirbelung des sonst glatten Spans entsteht.

Gegenüber bekannten Spanbrecheinrichtungen durch Einbringen von Zacken in die Hauptschneide unterscheidet sich die Erfindung dadurch, daß kein Abbrechen des Spans sondern eine Verwirbelung der Späne erzielt werden soll.

Gemäß dem Hauptanspruch ist die Erfindung bei jedem Bohrwerkzeug anwendbar, bei welchem eine Langspanbildung zu befürchten ist. Diese Werkstoffe werden vorzugsweise mit einem stumpfen Hauptschneidenspitzenwinkel in der Größenordnung von 150 bis 165° und einer vorzugsweise planen Schnittebene bearbeitet. Es wäre auch denkbar, erfindungsgemäße radienförmige Ausnehmungen in analoger Weise an den Nebenschneiden anzubringen.

Die Erfindung sieht vorzugsweise vor, daß gemäß dem Unteranspruch 5 erfindungsgemäße radienförmige Ausnehmungen bei bohrautomatentauglichen Vollhartmetallbohrern zur Herstellung von Leiterplattenbohrungen verwendet werden. Hier tritt das Problem der Störung des Automatenbetriebs besonders graß in Erscheinung.

In den weiteren Unteransprüchen sind vorteilhafte und zweckmäßige Weiterbildungen des erfindungsgemäßen Gedankens dargestellt.

Gemäß Unteranspruch 2 ist es vorteilhaft, daß die Ausnehmung in der Spanflächenebene bzw. in Seitenansicht des Bohrers die Formgebung eines Kreissegments oder einer Hyperbel aufweist. Maßgeblich ist die ständige Krümmung der axial zurückversetzten Schneidkante der Ausnehmung, die zur Verwirbelung des Spans führt.

Gemäß der Weiterbildung nach Unteranspruch 3 ist vorgesehen, daß die Ausnehmung in Stirnansicht des Bohrers parabelförmig ausgebildet ist und sich in den Rücken der Hauptschneide erstreckt. Dabei ist die Ausnehmung gemäß Unteranspruch 4 leicht in Richtung des Rückens zur Bildung eines Freiwinkels geneigt. Gemäß Unteranspruch 9 liegt die in Stirnansicht des Bohrers parabelförmige Ausnehmung mit ihrer Symmetrieachse senkrecht zur Hauptschneide oder in einem Winkel zwischen 85 bis 90° nach innen geneigt.

Die Weiterbildung der Erfindung nach Unteranspruch 6 und 7 sieht vorteilhafte Abmessungen der Ausbildung der erfindungsgemäßen Ausnehmungen vor. Hierbei hat sich gezeigt, daß bei Bohrwerkzeugen mit einem Nenndurchmesser von etwa 5 mm und größer, die Verwendung einer kleineren und einer größeren Ausnehmung pro Hauptschneide zweckmäßig ist.

Weitere erfindungswesentliche Merkmale und Vorteile ergeben sich aus den nachfolgend anhand der Zeichnung näher erläuterten Ausführungsbeispielen. Es zeigen

Fig. 1 einen herkömmlichen bohrautomatentauglichen Vollhartmetallbohrer zur Herstellung von Leiterplattenbohrungen mit Langspankrause,

Fig. 2 einen erfindungsgemäßen bohrautomatentauglichen Vollhartmetallbohrer zur Herstellung von Leiterplattenbohrungen,

Fig. 3 eine vergrößerte Ansicht des Bohrerkopfes des Bohrers nach Fig. 2 in Seitenansicht,

Fig. 4 eine Stirnansicht der Darstellung nach Fig. 3,

Fig. 5 eine alternative Ausbildung des Bohrerkopfs mit zwei Ausnehmungen pro Hauptschneide und

Fig. 6 eine Stirnansicht der Darstellung nach Fig. 5.

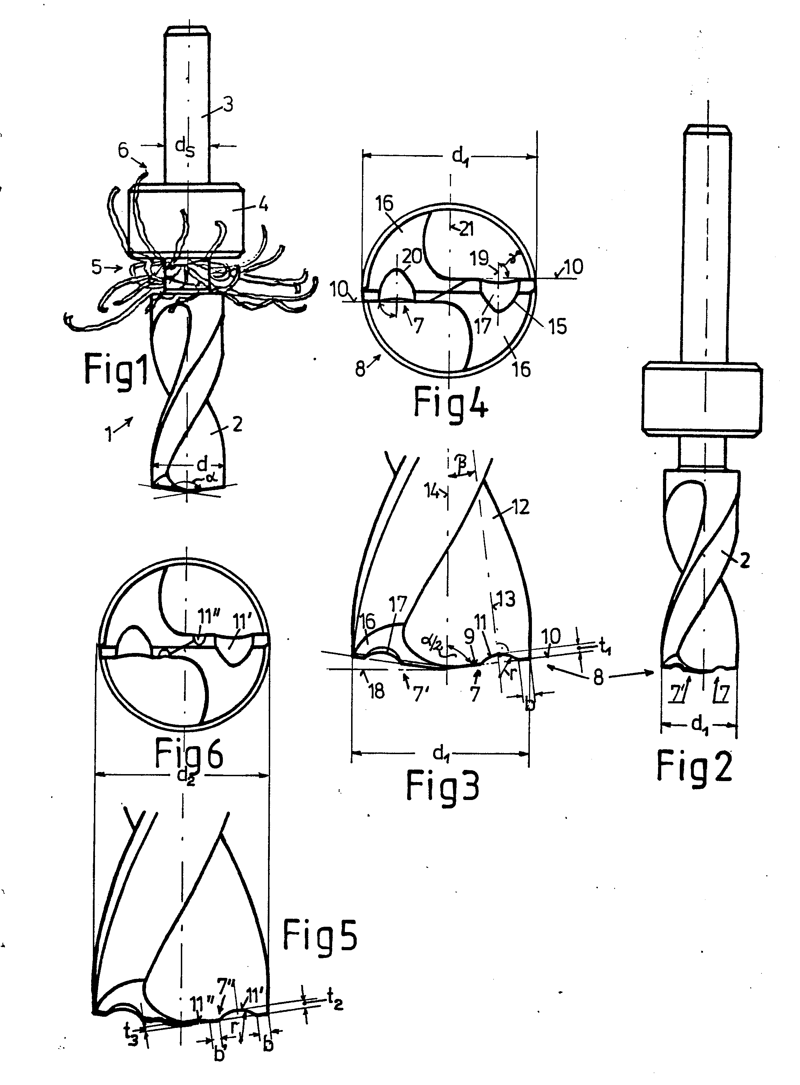

In der Fig. 1 ist ein herkömmlicher bohrautomatentauglicher Vollhartmetallbohrer (1) dargestellt, bestehend aus einem spiralförmigen Schneidteil (2) und einem zylindrischen Einspannschaft (3) sowie einem Anschlagring (4). Der Hauptschneidenspitzenwinkel α beträgt zwischen 150 und 165°, was vorwiegend zur Bearbeitung von langspanendem Werkstoff wie Kupfer der Kupferkaschierung der Leiterplatten üblich ist. Die Erfindung bezieht sich dabei vorwiegend auf Durchmesserbereiche des Nenndurchmessers d zwischen 3,2 mm und 7 mm zur Herstellung von Fanglochbohrungen oder sonstigen Funktionsbohrungen in Elektronikleiterplatten. Der Schaftdurchmesser ds ist dabei kleiner als der Nenndurchmesser d des Schneidteils (2), so daß sich das in der Fig. 1 dargestellte Langspangut als Langspankrause (5) vor dem Anschlagring (4) sammelt und zum Teil in den Einspannbereich (6) des Einspannschafts (3) hineinragt und damit die richtige Ablage des Bohrers im Magazin bzw. die Wiederaufnahme durch die Arbeitsspindel empfindlich stören kann. Gemäß der Erfindung soll demnach eine derartige Langspankrause (5) schon im Ansatz her vermieden werden.

Die Erfindung ist bei einem Bohrwerkzeug gemäß Fig. 2 dargestellt, wobei sich die erfindungsgemäßen Maßnahmen in der Ausbildung der beiden Hauptschneiden (7, 7') bewegen. Die übrige Ausbildung des Bohrwerkzeugs entspricht der nach Fig. 1.

Der Bohrerkopf (8) des Schneidteils (2) ist in Fig. 3 mit den erfindungsgemäßen Merkmalen in Seitenansicht und in Fig. 4 in der Stirnansicht dargetellt. Mit diesem erfindungsgemäßen Bohrwerkzeug ist eine automatengemäße Anwendung möglich. Dabei bezieht sich die Darstellung nach den Figuren 2 bis 4 in erster Ausführungsform auf einen Durchmesserbereich $d_1$ bis ca. 5 mm. Für einen größeren Durchmesserbereich $d_2$ wird die Ausführungsform nach den Figuren 5 und 6 gewählt.

Gemäß der Darstellung in Fig. 3 und 4 ist die sonst eine plane Schnittebene (10) bildende Hauptschneide (9) durch radienförmige Ausnehmungen (11) unterbrochen, wobei sich die Ausnehmung in die Spanfläche (12) des Schneidteils (2) bogenförmig bzw. kreissegmentförmig hinein erstreckt. Die in Fig. 3 dargestellte Mittelsenkrechte (13) auf die Schnittebene (10) bildet mit der Bohrerlängsachse (14) einen Winkel $\beta = 90°$ minus $\alpha/2$.

Die radienförmige Ausnehmung (11) ist in der Stirnansicht des Bohrerkopfes gemäß Fig. 4 als parabelförmige Schnittkurve (15) dargestellt, die sich als Schnittkurve mit dem Rücken (16) des Bohrerkopfs bildet. Der Radiengrund (17) der Ausnehmung (11) bildet mit der vor dem Bohrwerkzeug liegenden Arbeitsebene (18) (blattebene in Fig. 4) einen Freiwinkel von ca. 15 bis 20°, d. h. der in Fig. 4 dargestellte Radiengrund (17) neigt sich um ca. 15 bis 20° gegenüber der Blattebene nach unten in Richtung der Neigung des Rückens (16).

Die in Fig. 4 dargestellte Symmetrieachse (19) des Radiengrundes (17) bzw. die im Radiengrund liegende Tangente (19) der Ausnehmung bildet mit dem äußeren Bereich der Schnittebene (10) einen Winkel von $\gamma \approx 85$ bis 90°, d. h. die Spitze (20) der Ausnehmung (11) kann leicht geneigt in Richtung zur Symmetrieebene (21) des Bohrwerkzeugs ausgerichtet sein. In Fig. 3 und 4 ist das Bohrwerkzeug in einem Durchmesserbereich von $d_1 \approx 3$ bis 5 mm dargestellt. In diesem Fall beträgt der Radius r der Ausnehmung ca. 0,7 bis 0,9 mm und die Tiefe ($t_1$) mit welcher der Radiengrund von der Hauptschneide zurückgesetzt ist beträgt ca. $t_1 \approx 0,15$ bis 0,3 mm, wobei der kleinere Tiefenbereich den Bohrerdurchmesser $d_1$ bis 4 mm, der größere Tiefenbereich den Bohrern mit Durchmesser $d_1 > 4$ mm zugeordnet ist.

Die gleichen Maße gelten für die seitliche Stegbreite (b), d. h. die Stegbreite betragt ca. 0,15 bis 0,3 mm. Dabei wird die Stegbreite (b) für Bohrer bis 4 mm im Bereich von 0,1 bis 0,2 mm und für Bohrer > 4 mm 0,2 bis 0,3 mm gewählt.

In den Figuren 5 und 6 ist ein erfindungsgemäßes Bohrwerkzeug dargestellt, welches einen Nenndurchmesser $d_2$ von > 5 mm aufweist. Infolge der längeren Hauptschneide (7″) können pro Hauptschneide zwei Ausnehmungen (11′, 11″) in analoger Weise wie bereits beschrieben eingebracht sein, wobei die Hauptausnehmung (11′) analog ausgebildet ist, wie die radienförmige Ausnehmung (11) in den Figuren 3 und 4, während die zweite radienförmige Ausnehmung (11″) wesentlich kleiner ausgebildet ist. Die Tiefe ($t_2$) der Ausnehmung (11′) beträgt etwa $1/2 t_1$ der Ausführung nach Fig. 3, die Tiefe ($t_3$) der Ausnehmung (11″) etwa $1/3 t_1$ der Ausnehmung (11) nach Fig. 3. Die Außenstegbreite (b) nach Fig. 5 entspricht derjenigen nach Fig. 3. Das gleiche gilt für den Zwischenstegbereich (b′) zwischen den Ausnehmungen (11′ und 11″).

Im übrigen gilt die Beschreibung der Figuren 3 und 4 auch für die Ausführungsform nach den Figuren 5 und 6.

Die Erfindung ist nicht auf die dargestellten und beschriebenen Ausführungsbeispiele beschränkt. Sie umfaßt auch vielmehr alle fachmännischen Weiterbildungen mit dem gleichen erfindungsgemäßen Grundgedanken.

## Ansprüche

1. Bohrwerkzeug zur Bearbeitung von langspanenden Werkstoffen wie Kupfer o. dgl., mit einem vorzugsweise stumpfen Hauptschneidenspitzenwinkel und einer vorzugsweise planen Schnittebene der Hauptschneide, die geometrische Maßnahmen zum Spanumlenken aufweist, dadurch gekennzeichnet, daß jede Hauptschneide (7) wenigstens eine radienförmige Ausnehmung (11, 11′, 11″) aufweist, die durch permanentes Umlenken der Späne im Schneidbereich der radienförmigen Ausnehmung zu einer Verwirbelung der Späne führt.

2. Bohrwerkzeug nach Anspruch 1, dadurch gekennzeichnet, daß die radienförmige Ausnehmung (11, 11′, 11″) mit der spiralförmigen Spanfläche (12) die Formgebung eines Kreissegments mit dem Radius (r) und der Tiefe (t) oder die Formgebung einer Hyperbel bildet.

3. Bohrwerkzeug nach Anspruch 1 oder 2, dadurch gekennzeichnet, daß die Ausnehmung (11, 11′, 11″) in Stirnansicht des Bohrerkopfes (8) eine parabelförmige Außenkontur (15) mit Radiengrund (17) bildet und sich in den Rückenbereich (16) der Hauptschneide (7) erstreckt.

4. Bohrwerkzeug nach Anspruch 3, dadurch gekennzeichnet, daß die Ausnehmung (11, 11′, 11″) am Radiengrund (17) (Symmetrieachse 19) zur Arbeitsebene (18) einen Freiwinkel von ca. 15 bis 20° bildet.

5. Bohrwerkzeug, insbesondere nach einem oder mehreren der vorhergehenden Ansprüche 1 bis 4, zur Verwendung als bohrautomatentauglicher Vollhartmetallbohrer zur Herstellung von Leiterplattenbohrungen mit Kupferkaschierung o. dgl., mit einem Nenndurchmesser von ca. 3 bis 7 mm und einem Hauptschneidenspitzenwinkel von ca. 150 bis 165°, dadurch gekennzeichnet, daß jede Hauptschneide (7) wenigstens eine radienförmige Ausnehmung (11, 11', 11") aufweist, die die plane Schnittebene (10) der Hauptschneide (7) bogenförmig oder kreissegmentartig unterbricht, wobei die Bogenform bzw. Kreissegmentform in der Schnittebene mit der Spanfläche (12) liegt.

6. Bohrwerkzeug nach Anspruch 5, dadurch gekennzeichnet, daß die Hauptausnehmung (11, 11') einen Radius von ca. $r \approx 0{,}7$ bis $0{,}9$ mm und eine Tiefe $t_1$ des von der Hauptschneide (7) zurückgesetzten Radiengrundes von $t_1 \approx 0{,}15$ bis $0{,}3$ mm und eine Stegbreite b zwischen Hauptschneidenaußenkante und Ausnehmung von ca. $b \approx 0{,}15$ bis $0{,}3$ mm aufweist, wobei die größeren Werte vorzugsweise für Bohrer-Nenndurchmesser $d_1 > 4$ mm verwendbar sind.

7. Bohrwerkzeug nach Anspruch 5 oder 6, dadurch gekennzeichnet, daß für Bohrer mit einem Nenndurchmesser $d_2 > 5$ mm pro Hauptschneide (7) eine größere (11') und eine kleinere (11") radienförmige Ausnehmung vorgesehen ist, wobei die größere Ausnehmung (11') radial außen in einem Abstand (b) zur Außenkante angeordnet ist und wobei zwischen den Ausnehmungen (11', 11") eine Zwischenstegbreite (b') vorgesehen ist, wobei der Abstand (b) und die Zwischenstegbreite (b') untereinander etwa gleich groß sind und ca. $0{,}15$ bis $0{,}3$ mm betragen.

8. Bohrwerkzeug nach Anspruch 7, dadurch gekennzeichnet, daß die Tiefen ($t_2$, $t_3$) der doppelten Ausnehmungen (11', 11") pro Hauptschneide (7) ca. 1/3 bis 1/2 der Tiefe ($t_1$) eines Schneidwerkzeugs mit einer einzelnen Ausnehmung (11) pro Hauptschneide (7) beträgt, d. h. $t_2 \approx t_3 \approx (1/3$ bis $1/2) \times t_1$.

9. Bohrwerkzeug nach Anspruch 8, dadurch gekennzeichnet, daß die Tiefe $t_2 = 1/2 t_1$ und die Tiefe $t_3 = 1/3 t_1$ beträgt.

10. Bohrwerkzeug nach einem oder mehreren der vorhergehenden Ansprüche, dadurch gekennzeichnet, daß die in Stirnansicht des Bohrerkopfes (Fig. 4) dargestellte Ausnehmung (11) eine parabelförmige Außenkontur (15) mit einer Symmetrieachse (19) bzw. im Ausnehmungsgrund (17) liegende Tangente (19) aufweist, die einen Winkel von $\gamma \approx 85$ bis 90° zur äußeren planen Schnittebene (10) einnimmt.

0 278 288

Fig1

Fig4

Fig2

Fig6

Fig3

Fig5

**Europäisches Patentamt**

**EUROPÄISCHER RECHERCHENBERICHT**

Nummer der Anmeldung

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | **EINSCHLÄGIGE DOKUMENTE** | | EP 88100917.9 |
| Y | US - A - 3 778 180 (OSTROM) <br> * Gesamt * <br><br> -- | 1,2,5 | B 23 B 51/02 |
| Y | US - A - 1 384 733 (WOODS) <br> * Gesamt * <br><br> -- | 1,2,5 | |
| A | AT - B - 244 711 (AWEMA) <br> * Fig. 1,2 * <br><br> -- | 1,2,5 | |
| A | GB - A - 452 750 (SHINER) <br> * Gesamt * <br><br> ---- | 1,2,5 | |

RECHERCHIERTE SACHGEBIETE (Int. Cl.4)

B 23 B 51/00

Der vorliegende Recherchenbericht wurde für alle Patentansprüche erstellt.

| Recherchenort | Abschlußdatum der Recherche | Prüfer |
|---|---|---|
| WIEN | 14-04-1988 | LEBZELTERN |